# EUROPEAN PATENT SPECIFICATION

(11) **EP 1 745 463 B1**
(45) Date of publication and mention of the grant of the patent: **09.07.2008**
(21) Application number: 05718776.7
(22) Date of filing: 21.04.2005
(51) Int. Cl.: G10L 11/00, G10L 15/14

(54) **METHOD OF AND SYSTEM FOR CLASSIFICATION OF AN AUDIO SIGNAL**
VERFAHREN UND SYSTEM ZUR KLASSIFIZIERUNG EINES AUDIOSIGNALS
PROCEDE ET SYSTEME DE CLASSIFICATION D'UN SIGNAL AUDIO

(30) Priority: 29.04.2004 EP 04101841
(43) Date of publication of application: 24.01.2007
(73) Proprietor: Koninklijke Philips Electronics N.V., 5621 BA Eindhoven (NL)
(72) Inventor: BREEBAART, Dirk, A-1101 Vienna (AT); MCKINNEY, Martin, A-1101 Vienna (AT)
(74) Representative: Groenendaal, Antonius W. M.
(86) International application number: PCT/IB2005/051299
(87) International publication number: WO 2005/106844

(56) References cited:
- WO-A-01/20483
- US-B1- 6 330 536
- US-B1- 6 349 148
- TZANETAKIS G ET AL: "MUSICAL GENRE CLASSIFICATION OF AUDIO SIGNALS" IEEE TRANSACTIONS ON SPEECH AND AUDIO PROCESSING, IEEE INC. NEW YORK, US, vol. 10, no. 5, July 2002 (2002-07), pages 293-302, XP001203942 ISSN: 1063-6676
- LIPPENS S ET AL: "A comparison of human and automatic musical genre classification" ACOUSTICS, SPEECH, AND SIGNAL PROCESSING, 2004. PROCEEDINGS. (ICASSP '04). IEEE INTERNATIONAL CONFERENCE ON MONTREAL, QUEBEC, CANADA 17-21 MAY 2004, PISCATAWAY, NJ, USA,IEEE, vol. 4, 17 May 2004 (2004-05-17), pages 233-236, XP010718448 ISBN: 0-7803-8484-9
- PYE D ED - INSTITUTE OF ELECTRICAL AND ELECTRONICS ENGINEERS: "CONTENT-BASED METHODS FOR THE MANAGEMENT OF DIGITAL MUSIC" 2000 IEEE INTERNATIONAL CONFERENCE ON ACOUSTICS, SPEECH, AND SIGNAL PROCESSING. PROCEEDINGS. (ICASSP). ISTANBUL, TURKEY, JUNE 5-9, 2000, IEEE INTERNATIONAL CONFERENCE ON ACOUSTICS, SPEECH, AND SIGNAL PROCESSING (ICASSP), NEW YORK, NY : IEEE, US, vol. VOL. 4 OF 6, 5 June 2000 (2000-06-05), pages 2437-2440, XP000993727 ISBN: 0-7803-6294-2
- YIBIN ZHANG ET AL: "A study on content-based music classification" SIGNAL PROCESSING AND ITS APPLICATIONS, 2003. PROCEEDINGS. SEVENTH INTERNATIONAL SYMPOSIUM ON JULY 1-4, 2003, PISCATAWAY, NJ, USA,IEEE, vol. 2, 1 July 2003 (2003-07-01), pages 113-116, XP010653316 ISBN: 0-7803-7946-2

## Description

### FIELD OF THE INVENTION

This invention relates in general to a system for and a method of identifying an audio input signal, in particular a music track, and to an audio processing device for classifying an audio input signal, particularly music tracks.

### BACKGROUND OF THE INVENTION

As a result of developments in broadcast technology, transmission bandwidth and the internet, and owing to the ever-increasing capacities of consumer storage devices, consumers now have access to a rapidly increasing amount of multimedia content. Music collections of more than 10,000 tracks are no exception. With this increase comes a need for automatic filtering, processing, and storing of the content. Organization and selection of music from such a large music database is difficult and time-consuming. The problem can be addressed in part by the inclusion of metadata, which can be understood to be an additional information tag attached in some way to the actual audio data file. Metadata is sometimes provided by service providers, but to avail of these services, the consumer often requires an on-line connection to the service provider, who will also most likely charge the customer for retrieved data. Therefore, retrieval of metadata from external service providers may not always be attractive for the consumer.

Current techniques for the automatic classification of audio typically rely on relevant features being extracted from audio on which analyses can be based. For example, WO 01/20483 A2 describes a method for searching in a database for a second piece of music similar to a first piece of music. Here, the database consists of a collection of songs, each associated with a kind of metadata in the form of parameters. Parameters are identified in the first piece of music and are analysed to locate a matching set of parameters in the database. This method is confined to locating a second song similar to a first song, and can therefore only be of very limited interest to a user who is unlikely to want to listen to songs that are all the same. The article "Musical Genre Classification of Audio Signals" by George Tzanetakis et al, IEEE Transactions on Speech and Audio Processing, Vol. 10 No. 5, July 2002, XP001203942 discloses a method for automatic classification of audio signals into a hierarchy of musical genres. More specifically, three feature sets for representing timbral texture, rhythmic content and pitch content are proposed. The performance and relative importance of the proposed features is investigated by training statistical pattern recognition classifiers using real-world audio collections. Both whole file and real-time frame-based classification schemes are described.
Recent research has shown that the music preference of people coincides with the music that was popular when they were between ten and twenty years old. This means that many people will have a preference for music from a certain decade, for example the 80s. Finding songs from a particular era, or songs that sound as though they originate from that era, is difficult. Metadata indicating a release date of a song will not always be available for all of the songs in a collection, particularly since the use of metadata is a relatively recent development, and older collections will not avail of it.

### OBJECT AND SUMMARY OF THE INVENTION

Therefore, it is an object of the present invention to provide a method and a system which can be used to easily identify the release date of an audio segment without the use of metadata.

To this end according to the invention a method according to independent claim 1, a system according to independent claim 8 and a computer progam product according to independent claim 11 are provided. Favourable embodiments are defined in the dependent claims. The present invention provides a method of classifying an audio input signal according to its release date, which method comprising the following steps, namely extracting at least one feature of the audio input signal, deriving a feature vector for the input audio signal based on the at least one feature, and determining the probability that the feature vector for the input audio signal falls within any of a number of classes, each corresponding to a particular release-date information. Here, the "audio input signal" is a signal which might originate from an audio data file, a music track, a soundtrack, an MP3 music file, etc. The audio input signal can also be an analog signal, e.g. from a microphone, which is preferably - but not necessarily - converted into digital form for further digital signal processing. A short excerpt of the audio signal is sufficient for estimation of its release date using the method according to the invention.

An appropriate system for classifying the release date of an audio input signal according to the method described above comprising the following means, namely a feature extraction unit for extracting at least one feature of the audio input signal, a derivation unit for deriving a feature vector for the input audio signal based on the at least one features, and a probability determination unit for determining the probability that the feature vector for the input audio signal falls within any of a number of classes, each corresponding to a particular release-date information.
The method and the system thus provide an easy way of automatically estimating the release-date of an audio input signal. Thereby, the phrase release date can be intended to indicate a particular calendar year, but also a period of time, such as "early 70s" or "sometime around 1998", or any other point in time such as a particular date. According to the invention, a release date might be a year-of-release, which is defined as a year which might be preceded and followed by a duration of time, which defines a measure of uncertainty, within which the audio signal is most likely to have been released. The total length of the time-span framing an identified period of release for a particular audio signal might be interpreted as a measure of the accuracy with which that audio signal can be dated. Thus, a relatively short time-span framing an identified year would indicate that the correspond ing audio signal can be confidently assumed to originate from the identified period of release, whereas a long time-span would allow for a measure of uncertainty as to the proposed date of origin of the audio signal.

By suitable application of the invention, a distinction can even be made between the actual release-date and a perceived release-date. The actual release-date is indeed the year in which a particular song was released, whereas the perceived release-date is the year with which most listeners would associate the song. The actual release-date information, different for both the cover version and the original, can be correctly estimated on the basis of the extracted features. In the case of a cover version very similar to the original, where the cover version does not significantly differ from the original in genre characteristics, style, etc. but was released considerably later, the cover version might, if desired, be classified with the perceived release-date.

The dependent claims and the subseque nt description disclose particularly advantageous embodiments and features of the invention.

"Features" are descriptive characteristics of an audio input signal, such as signal bandwidth, signal energy, spectral roll-off frequency, spectral centroid etc. Before extracting the features, the audio signal is usually converted into digital form. Thereafter, the features can be calculated for example from overlapping frames of audio samples. Further processing, such as calculating the power spectrum, normalizing the power spectrum, and calculating the energy over a number of distinct energy bands is performed on the extracted features to give a number of additional features. Finally, from among the entire set of features, a selection of features is put together to give a feature vector for the audio input signal.

The feature vector thus derived for the input audio signal can then be used in classifying the audio signal. To this end, an analysis is performed on the feature vector to determine the probability of its falling within any one of a number of possible classes, each of which corresponds to a particular release-date information. Classes can be represented graphically by clusters of points, each point being indicated by a feature vector. The clusters can be understood to be arranged in an n-dimensional feature space, where n corresponds to the number of features used to calculate each feature vector. Each cluster is built based on feature vectors previously calculated for audio signals from an audio signal collection that is representative for a classification of an audio signal with respect to a certain release-date. To ensure a high success rate of classification, the audio signal collection preferably comprises a sufficiently large number of audio signals distributed over all of the desired release-date classes.

In a preferred embodiment of the invention, the class (or its corresponding cluster) representing a particular release-date information might be described by a model derived from a collection of previously calculated feature vectors associated with this release-date information. Such a model might be for example a Gaussian multivariate model with each class having its own mean vector and its own covariance matrix. To ensure the best possible classification results, the dimensionality of the model space is kept as low as possible, while selecting the features that give the best possible discrimination between the classes or clusters of the resulting model. Known methods of feature ranking and dimensionality reduction can be applied to yield the optimum set of features to use. This set of features is used in building the class model based on a collection of audio signals, and later for calculating the feature vector for any input audio signal to be classified using the model.

A number of known methods are available for calculating the probability of the feature vector of an audio input signal falling within a particular class, i.e. of classifying the feature vector.

In a preferred embodiment of the invention, a method of discriminant analysis is applied. With this method of analysis, a feature vector can be classified using, for example, Bayes rule to determine the probability that a particular class encompasses this feature vector and applying probability densities that have been previously calculated for each class, based on the average value and covariance matrix for each class. If the covariance matrices differ across classes, the discriminant function is quadratic, so that the decision boundaries form quadratic surfaces in the feature space. This method is referred to in this case as quadratic discriminant analysis. If the covariance matrix is constant across classes, the decision boundaries form linear surfaces in the feature space, and the method of analysis is known as linear discriminant analysis.

Using these methods of analysis, the position of the feature vector in the feature space can be "localised", so that the class with which it is most closely associated can be determined. If the feature vector is clearly located towards the centre of a particular class associated with a particular release-date, then the associated audio input signal can be assumed to have been released at the corresponding date, such as "1970". If, however, the feature vector is located more towards the edge or the border of the cluster, then the inaccuracy is reflected in a time-span framing the release-date. For example, the release-date or the year-of-release, respectively, for the audio input signal might be reported as "1970 ± 2".

The choice of features can have a considerable effect on the success of the classification method. Therefore, in a particularly preferred embodiment of the invention, the feature vector used to classify the audio input signal comprises auditory filter temporal envelope modulation features and/or psycho-acoustic features of the audio input signal.

Auditory filter temporal envelope (AFTE) modulation features are obtained by filtering the input audio signal using a number of filters of a certain type known as gamma-tone filters, whose spectral shape resembles the frequency resolution of the human auditory system. Further processing is carried out on the filtered signal to give a set of AFTE features. A powerful property of the AFTE feature set is that it allows identification of those parts of the waveform frequency spectrum and envelope frequency spectrum that contain relevant information for classification purposes. Using a standard Gaussian framework for classification, results show that the temporal behaviour of features is important for automatic audio classification. In addition, classification is better, on average, if based on features from models of auditory perception rather than on standard features.

Psycho-acoustic features are based on precepts of roughness, sharpness, loudness etc. Roughness is the perception of temporal envelope modulations in the range of about 20-150 Hz and shows its maximum for modulations near 70 Hz. Loudness is the sensation of intensity and sharpness is a perception related to the spectral density and the relative strength of high-frequency energy. These features can be particularly useful in year-of-release classification, since it has been observed that some qualities of music production alter throughout the years, corresponding to developments in recording and mixing equipment, and these qualities are reflected in part by the psycho-acoustic features. For example, the loudness of music has increased steadily through the years, so that the loudness can be put to good effect in dating of origin of a piece of music.

This allows the system described herein to be used for both actual and perceived release-date classification. As already mentioned, a piece of music might be perceived to date from a particular time, even though it has been created and released considerably later. The actual release-date can be identified using the method described.

Preferably, by iteratively adjusting some of the features such as loudness etc. and carrying out the classification process, the perceived release-date can also easily be identified. The adjustment might involve adapting weighting coefficients for the features, or some similar procedure. For example, a cover version of an Abba number, or a piece of music intended to copy the Abba style, even if released in the 90s might still be correctly identified with the late 70s if the features derived from loudness etc. are adjusted to reflect the levels typical for the 70s. On the other hand, the invention can recognise the correct release-date of a piece of music, exhibiting typical characteristics of a past genre, even if it was released at a considerably later point in time.

The invention might be useful for a variety of audio processing applications. For example, in a preferred embodiment, the classifying system for estimating the year-of-release of an audio input signal as described above might be incorporated in an audio processing device for choosing an audio sample according to a particular year-of release-date. The audio processing device might comprise a music query system for choosing one or more music data files from a database on the basis of release-date. The audio processing device might interpret user input to determine any processing steps to be carried out on the features of an audio signal extracted from a music data file before estimating release-date. For example, the user of the device might input parameters specifying whether the pieces of music are to be selected on the basis of their actual release-date, or whether they should be chosen on the basis of a perceived release-date. In this way, the user can easily put together a collection of music, from among one or more genres, from a particular decade or time-span, or he might prefer to specify a particular type of music such as 60s type rock-and-roll, regardless of actual year-of-release. Once estimated for a particular piece of music, the audio processing device might store the actual and/or perceived release-date information in a local or external database for future use.

Another embodiment of the audio processing device comprises an automatic DJ apparatus for selecting pieces of music from a music database according to a desired sequence. Such an automatic DJ apparatus might be a professional device in a recording studio, in a radio or TV station, in a discotheque, etc, or might be incorporated in a PC, a home entertainment device, a PDA, a mobile phone etc. The automatic DJ apparatus might comprise an audio output for playing the selected pieces of music, or it might be connected to a separate means of playing music. It might feature a means of connecting to a remote music database, e.g. in the internet, or to a local music database, e.g. a list of MP3 files on a home entertainment device. The user might specify, for example, 60s style rock-and-roll, followed by a different genre such as 70s style disco. The automatic DJ apparatus searches a music database for actual and perceived release-date information for music of the specified genres and compiles a list of the pieces of music in the desired order.

The classifying system according to the invention can be realised quite economically as a computer program. All components for determining a measure of ambiguity for a music input signal such as filter-banks, resonator filter-banks, energy summation unit, ranking unit, tempo scheme compiler etc. can be realised in the form of computer program modules. Any required software or algorithms might be encoded on a processor of a hardware device, so that an existing hardware device might be adapted to benefit from the features of the invention. Alternatively, the components for determining a measure of ambiguity for a music input signal can equally be realised at least partially using hardware modules, so that the invention canbe applied to digital and/or analog music input signals.

In one embodiment of the invention, the music database might be in a storage device separate from a list of associated release-date information previously compiled using the method described, or both may be stored on the same device e.g. on a personal computer, on a CD or DVD etc. The music database might be stored in one location or might be distributed over several devices, e.g. a collection of music CDs. In a preferred embodiment of the invention, the music database and the release-date information for the elements of the music database are stored in such a manner that minimum effort is required to first retrieve a release-date information for a particular piece of music.
Other objects and features of the present invention will become apparent from the following detailed descriptions considered in conjunction with the accompanying drawing. It is to be understood, however, that the drawings are designed solely for the purposes of illustration and not as a definition of the limits of the invention.

### BRIEF DESCRIPTION OF THE DRAWINGS

Fig.1 is a schematic block diagram of a system for determining the year of release of a piece of music in accordance with an embodiment of the present invention.
Fig. 2 is a graphical representation of a number of classes in a two-dimensional feature vector space.

### DESCRIPTION OF EMBODIMENTS

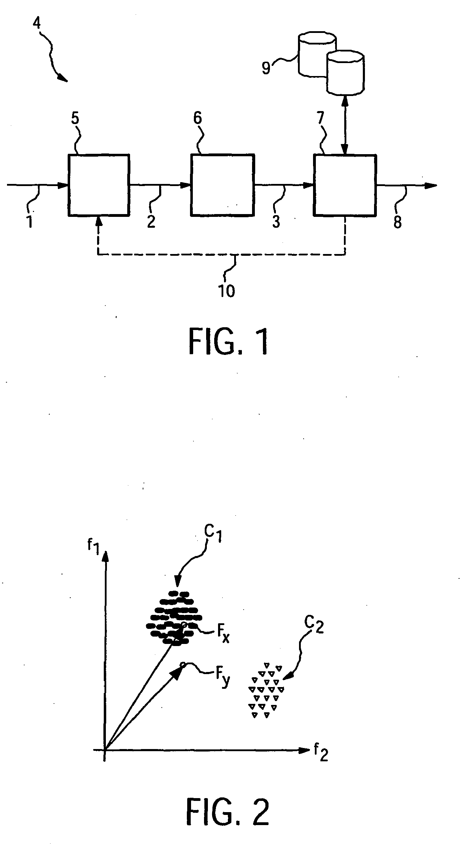

In Figure 1, an audio input signal 1, in this case a digital music input signal 1 originating from a music data file, music track, MP3 file or similar, is input to a classification system 4.

In a feature extraction unit 5, features 2 are extracted from ten 743ms frames of the audio input signal samples. The samples are preferably taken from a position towards the middle of the track or music data file, since the beginning and end of a music track can often sound somewhat different to the main part.

In a following derivation unit 6, one feature vector 3 is computed for the features 2 of each of the ten frames of the input audio signal 1.

Each feature vector 3 then undergoes a classification process in a probability determination unit 7, where steps of analysis are performed to determine the probability that a feature vector 3 falls within one particular class of a number of possible classes.

Therefore, the classification system 4 has access to a database 9 containing information required for the classification process. The database 9 has been built and trained, for example, by having two listeners listen to a large number of songs and independently classify them according to a predefined list of classes (C1, C2,..., Cn), each corresponding to a particular release-date information, such as "1966-1970", "1970-1974" etc. Each song, or track would be rated with a score as to how good an example it is for its class (C1, C2,..., Cn). From these songs, a reduced collection is identified, consisting of all tracks that fulfil the following criteria:
■ the class (C1, C2, ..., Cn) identified by both listeners is the same for the track;
■ the rating or score of each track was larger than a predefined minimum;
■ the maximum number of tracks from each artist or album was two.

Feature vectors are calculated for each of the tracks of the reduced collection in analogy to the calculation of the feature vectors of the input signals. Using these feature vectors and the classification information supplied by the listeners, a model can be constructed representing the classes (C1, C2,..., Cn). This information is stored in the database 9 for use in the classification process. The processing steps involved in deriving feature vectors for training the database are identical to the steps used later on in deriving feature vectors from input audio signals 1 for classification.

After completion of the classification process, the classification system 4 reports the result 8 in a suitable manner, such as outputting to a display, not shown in the diagram. The output might be of the form "Track ABC: year-of-release 1990 ± 2", indicating that the track identified as "ABC" was most likely released in 1990 but an uncertainty factor of two years must be taken into account.

Figure 2 shows a graphical representation of a number of classes (C1, C2) represented by clusters in a two-dimensional feature vector space. Normally, the number of feature vectors and the dimensionality of the vector space would be considerably higher, but would not easily be shown in a two-dimensional representation. Therefore, for the sake of simplicity, the graph has been limited to a two-dimensional feature space built up by two features fl and f2.

For the purposes of illustration, let us assume that the classification system 4 is being used to classify two music tracks "X" and "Y". Let us further assume that the classification system 4 can classify into one oftwo classes 1 or 2, where class C1 represents early 70s music ("1970-1974") and C2 represents late 70s music ("1975-1979"). Feature vectors Fx, Fy for the music tracks "X" and "Y" are calculated as already described, and the probability derivation unit 7 now proceeds to locate the classes into which these two feature vectors Fx, Fy most likely belong. Since Fx is clearly located within class C1, the probability determination unit can confidently conclude that music track "X" originates from the middle of the time-span represented by class C1, and reports "1972 ± 1" as the classification result for this music track. Fy on the other hand is located between class C1 and class C2, but rather closer to C 1 than C2. Therefore, the probability determination unit 7 concludes that the music track for which these feature vectors have been calculated originates from sometime between these classes, and reports an estimated year-of-release of " 1974 ± 4", indicating that the track was most probably released around 1974, but might have been released up to an estimated 4 years before or after. The uncertainty is a measure of the distance between a feature vector Fx, Fy and the centroid of the class C1, C2.

When classifying a feature vector 3 calculated for the input signal 1, the probability determination unit 7 may conclude in some cases that a better classification result may be achieved if some of the features 2 are modified. By means of appropriate signals 10, the probability determination unit 7 informs the feature extraction unit 5 of the necessary modifications. After carrying out the modifications, the feature extraction unit 5 forwards the newly calculated features 2 to the derivation unit 6 so that the classification process can be carried out again using new feature vectors 3. This iterative process can be repeated until the probability determination unit 7 concludes that the result 8 is satisfactory.

Although the present invention has been disclosed in the form of preferred embodiments and variations thereon, it will be understood that numerous additional modifications and variations could be made thereto without departing from the scope of the invention. For example, any kind of audio, such as radio broadcasts, movie soundtracks etc., might be dated using the method described. Furthermore, the invention is not limited to using the methods of analysis described, but may apply any suitable analytical method.

For the sake of clarity, it is also to be understood that the use of "a" or "an" throughout this application does not exclude a plurality, and "comprising" does not exclude other steps or elements. A "unit" may comprise a number of blocks or devices, unless explicitly described as a single entity.

## Claims

1. A method of classifying an audio input signal (1), said method comprising the following steps, namely:
- extracting at least one feature (2) of the audio input signal (1);
- deriving a feature vector (3) for the input audio signal (1) based on the at least one extracted feature (2);
- determining the probability that the feature vector (3) for the input audio signal (1) falls within any of a number of classes (C1, C2, ..., Cn), each class corresponding to a particular release-date information , and determining a class based on said probability, **characterised by** the step of reflecting an inaccuracy in said determining a class by means of a time span framing the release-date.

2. A method according to claim 1, wherein a class (C1, C2, ..., Cn) representing a particular release-date information is defined based on feature vectors previously calculated for audio signals from an audio signal collection and associated with this release-date information.

3. A method according to claim 2, wherein a class (C1, C2, ..., Cn) representing a particular release-date information is described by a model derived from a collection of previously calculated feature vectors associated with this release-date information.

4. A method according to any of the preceding claims wherein the determination of the probability of the feature vector (3) for the audio input signal (1) falling within a particular class (C1, C2, ..., Cn) comprises a step of performing discriminant analysis on the feature vector (3).

5. A method according to claim 1, wherein the feature vector (3) comprising
- psycho-acoustic features (2) of the audio input signal (1) and/or
- features (2) describing an auditory model representation of a temporal envelope of the audio input signal (1).

6. A method according to claim 1 or claim 2, wherein the extraction of a feature (2) comprises calculating a power spectrum for each feature (2), normalizing the power spectrum, and calculating the energy over a number of distinct energy bands.

7. A method according to any of the preceding claims wherein the features (2) of the input audio signal (1) are adjusted iteratively during the classification process to obtain a feature vector (3) for optimal classification of the input audio signal (1).

8. A classifying system (4) for classifying an audio input signal (1), said classifying system comprising the following means, namely:
- a feature extraction unit (5) for extracting at least one feature (2) of the audio input signal (1);
- a derivation unit (6) for deriving a feature vector (3) for the input audio signal (1) based on the at least one extracted feature (2);
- a probability determination unit (7) for determining the probability that the feature vector (3) for the input audio signal (1) falls within any of a number of classes (C1, C2,..., Cn), each class corresponding to a particular release-date information , and for determining a class based on said probability, **characterised in that** the probability determination unit is adapted for reflecting an inaccuracy in said determining a class by means of a time span framing the release-date.

9. An audio processing device for choosing an audio item according to a particular release-date, comprising a classifying system according to claim 8.

10. An audio processing device according to claim 9 comprising an automatic DJ apparatus for choosing pieces of music from a music database according to a user-defined sequence of release-date information so that a grouping of the music according to actual or perceived release-date is achieved.

11. A computer program product directly loadable into the memory of a programmable audio processing device comprising software code portions for performing the steps of a method according to claims 1 to 7 when said program is run on the audio processing device.

## Patentansprüche

1. Verfahren zum Klassifizieren eines Audiosignals (1), wobei das genannte Verfahren die nachfolgenden Verfahrensschritte umfasst:
- das Extrahieren wenigstens eines Merkmals (2) des Audio-Eingangssignals (1);
- das Herleiten eines Merkmalsvektors (3) für das Eingangs-Audiosignal (1), und zwar auf Basis des wenigstens einen extrahierten Merkmals (2);
- das Ermitteln der Wahrscheinlichkeit, dass der Merkmalsvektor (3) für das Eingangs-Audiosignal (1) in eine Klasse einer Anzahl Klassen (C1, C2, ..., Cn) fällt, wobei jede Klasse einer bestimmten Freigabedatumsinformation entspricht, und das Ermitteln einer Klasse auf Basis der genannten Wahrscheinlichkeit;
**gekennzeichnet durch** den Verfahrensschritt einer Reaktion auf einer Ungenauigkeit bei der genannten Ermittlung einer Klasse mit Hilfe einer Zeitspanne, in der sich das Freigabedatum befindet.

2. Verfahren nach Anspruch 1, wobei eine Klasse (C1, C2, ..., Cn), die eine bestimmte Freigabedatumsinformation darstellt, definiert wird, und zwar auf Basis von Merkmalsvektoren, die vorher für Audiosignale aus einer Audiosignalsammlung berechnet wurden und mit dieser Freigabedatumsinformation assoziiert sind.

3. Verfahren nach Anspruch 2, wobei eine Klasse (C1, C2, ..., Cn) die eine bestimmte Freigabedatumsinformation darstellt, durch ein Modell beschrieben wird, das aus einer Sammlung vorher berechneter Merkmalsvektoren hergeleitet worden ist, die mit dieser Freigabedatumsinformation assoziiert sind.

4. Verfahren nach einem der vorstehenden Ansprüche, wobei die Ermittlung der Wahrscheinlichkeit des Merkmalsvektors (3) für4 das Audiosignal (1), der in einer bestimmten Klasse (C1, C2, ..., Cn) liegt, einen Verfahrensschritt umfasst, der aus der Durchführung einer unterscheidenden Analyse in dem Merkmalsvektor (3) besteht.

5. Verfahren nach Anspruch 1, wobei der Merkmalsvektor (3) Folgendes umfasst:
- psychoakustische Merkmale (2)des Audio-Eingangssignals (1) und/oder
- Merkmale (2), die eine Gehörmodellbeschreibung einer zeitlichen Umhüllenden des Audio-Eingangssignals (1) beschreiben.

6. Verfahren nach Anspruch 1 oder 2, wobei die Extraktion eines Merkmals (2) die Berechnung eines Leistungsspektrums für jedes Merkmal (2), die Normalisierung des Leistungsspektrums und die Berechnung der Energie über eine Anzahl einzelner Energiebänder umfasst.

7. Verfahren nach einem der vorstehenden Ansprüche, wobei die Merkmale (2) des Eingangs-Audiosignals (1) während des Klassifizierungsprozesses zum Erhalten eines Merkmalsvektors (3) zur optimalen Klassifizierung des Eingangssignals (1) wiederholt eingestellt werden.

8. Klassifizierungssystem (4) zur Klassifizierung eines Audio-Eingangssignals (1), wobei das genannte Klassifizierungssystem die nachfolgenden Mittel umfasst, und zwar:
- eine Merkmalsextraktionseinheit (5) zum Extrahieren wenigstens eines Merkmals (2) des Audio-Eingangssignals (1);
- eine Herleitungseinheit (6) zum Herleiten eines Merkmalsvektors (3) für das Eingangs-Audiosignals (1), und zwar auf Basis des wenigstens einen extrahierten Merkmals (2);
- eine Wahrscheinlichkeitsermittlungseinheit (7) zur Ermittlung der Wahrscheinlichkeit, dass der Merkmalsvektor (3) für das Eingangs-Audiosignal (1) in einer Anzahl Klassen (C1, C2, ..., Cn) liegt, wobei jede Klasse eine bestimmte Freigabedatumsinformation entspricht, und zur Ermittlung einer Klasse, und zwar auf Basis der genannten Wahrscheinlichkeit, **dadurch gekennzeichnet, dass** die Wahrscheinlichkeitsermittlungseinheit dazu vorgesehen ist, eine Ungenauigkeit bei der genannten Ermittlung einer Klasse zu reflektieren, und zwar mit Hilfe einer Zeitspanne, die das Freigabedatum einrahmt.

9. Audioverarbeitungsanordnung zum Wählen eines Audio-Items entsprechend einem bestimmten Freigabedatum, wobei die Anordnung ein Klassifizierungssystem nach Anspruch 8 umfasst.

10. Audioverarbeitungsanordnung nach Anspruch 9, wobei die Anordnung eine automatische DJ-Einrichtung zum Wählen von Musikstücken aus einer Musikdatei entsprechend einer von dem Benutzer definierten Reihenfolge von Freigabedateninformation umfasst, so dass eine Musikgruppierung entsprechend einem wirklichen oder wahrgenommenen Freigabedatum erreicht wird.

11. Computerprogrammprodukt, das unmittelbar in den Speicher einer programmierbaren Audioverarbeitungsanordnung geladen werden kann, mit Softwarecodeteilen zum Durchführen der Schritte eines Verfahrens nach den Ansprüchen 1 bis 7, wenn das genannte Programm in der Audioverarbeitungsanordnung durchgeführt wird.

## Revendications

1. Procédé de classification d'un signal d'entrée audio (1), ledit procédé comprenant notamment les étapes consistant à:
- extraire au moins une caractéristique (2) du signal d'entrée audio (1);
- dériver un vecteur caractéristique (3) pour le signal d'entrée audio (1) sur la base de l'au moins une caractéristique extraite (2);
- déterminer la probabilité que le vecteur caractéristique (3) pour le signal d'entrée audio (1) rentre dans l'une quelconque d'un certain nombre de classes (C1, C2, ..., Cn), chaque classe correspondant à une information particulière de la date de libération et à la détermination d'une classe sur la base de ladite probabilité, **caractérisé par** l'étape consistant à refléter une imprécision de ladite détermination d'une classe au moyen d'une période composant la date de libération.

2. Procédé selon la revendication 1, dans lequel une classe (C1, C2, ..., Cn) représentant une information particulière de la date de libération est définie sur la base de vecteurs caractéristiques qui sont calculés au préalable pour des signaux audio à partir d'une collection du signal audio et qui sont associés à cette information de la date de libération.

3. Procédé selon la revendication 2, dans lequel une classe (C1, C2,..., Cn) représentant une information particulière de la date de libération est décrite par un modèle qui est dérivé d'une collection de vecteurs caractéristiques préalablement calculés qui sont associés à cette information de la date de libération.

4. Procédé selon l'une quelconque des revendications précédentes 1 à 3, dans lequel la détermination de la probabilité du vecteur caractéristique (3) pour le signal d'entrée audio (1) rentrant dans une classe particulière (C1, C2, ..., Cn) comprend une étape consistant à exécuter une analyse discriminante du vecteur caractéristique (3).

5. Procédé selon la revendication 1, dans lequel le vecteur caractéristique (3) comprend:
- des caractéristiques psycho-acoustiques (2) du signal d'entrée audio (1) et/ou
- des caractéristiques (2) décrivant une représentation du modèle auditif d'une enveloppe temporelle du signal d'entrée audio (1).

6. Procédé selon la revendication 1 ou selon la revendication 2, dans lequel l'extraction d'une caractéristique (2) comprend le calcul d'un spectre de puissance pour chaque caractéristique (2), ce qui normalise le spectre de puissance, et le calcul de l'énergie sur un certain nombre de bandes d'énergie distinctes.

7. Procédé selon l'une quelconque des revendications précédentes 1 à 6, dans lequel les caractéristiques (2) du signal d'entrée audio (1) sont ajustées itérativement pendant le processus de classification de manière à obtenir un vecteur caractéristique (3) pour la classification optimale du signal d'entrée audio (1).

8. Système de classification (4) pour classifier un signal d'entrée audio (1), ledit système de classification comprenant les moyens suivants, notamment:
- une unité d'extraction de caractéristiques (5) pour extraire au moins une caractéristique (2) du signal d'entrée audio (1);
- une unité de dérivation (6) pour dériver un vecteur caractéristique (3) pour le signal d'entrée audio (1) sur la base de l'au moins une caractéristique extraite (2);
- une unité de détermination de probabilité (7) pour déterminer la probabilité que le vecteur caractéristique (3) pour le signal d'entrée audio (1) rentre dans l'une quelconque d'un certain nombre de classes (C1, C2, ..., Cn), chaque classe correspondant à une information particulière de la date de libération et à la détermination d'une classe sur la base de ladite probabilité, **caractérisé en ce que** l'unité de détermination de probabilité est adaptée de manière à refléter une imprécision de ladite détermination d'une classe au moyen d'une période composant la date de libération.

9. Dispositif de traitement audio pour choisir un élément audio selon une date particulière de libération, comprenant un système de classification selon la revendication 8.

10. Dispositif de traitement audio selon la revendication 9 comprenant un appareil automatique DJ pour choisir des pièces de musique à partir d'une base de données de musique selon une séquence définie par l'utilisateur de l'information de date de libération, de sorte que l'on réalise un groupement de la musique selon la date de libération réelle ou perçue.

11. Produit de programme informatique qui est directement chargeable dans la mémoire d'un dispositif programmable de traitement audio comprenant des parties de code logicielles pour l'exécution des étapes d'un procédé selon les revendications précédentes 1 à 7 lorsque ledit programme est exécuté sur le dispositif de traitement audio.
